# FASCICULE DE BREVET EUROPEEN

(11) **EP 4 615 726 B1**
(45) Date de publication et mention de la délivrance du brevet: **26.08.2026**
(21) Numéro de dépôt: 23809707.5
(22) Date de dépôt: 18.10.2023
(51) Int. Cl.: B60R 16/02, B60K 1/04

(54) **VEHICULE ELECTRIQUE AVEC GROUPE MOTOPROPULSEUR DISPOSE A L'AVANT ALIMENTE PAR DES CABLES HAUTE TENSION**
ELEKTROFAHRZEUG MIT EINEM FRONTANTRIEBSSTRANG MIT HOCHSPANNUNGSKABELN
ELECTRIC VEHICLE WITH A POWERTRAIN ARRANGED AT THE FRONT SUPPLIED BY HIGH-VOLTAGE CABLES

(30) Priorité: 09.11.2022 FR 2211676
(43) Date de publication de la demande: 17.09.2025
(73) Titulaire: Stellantis Auto SAS, 78300 Poissy (FR)
(72) Inventeur: DORE, Martial, 78955 Carrières sous Poissy (FR)
(74) Mandataire: PSIP
(86) Numéro de dépôt international: PCT/FR2023/051625
(87) Numéro de publication internationale: WO 2024/100335

(56) Documents cités:
- FR-A1- 3 114 052
- US-A1- 2022 306 213

## Description

001. La présente invention revendique la priorité de la demande française N°2211676 déposée le 09.11.2022 .

002. La présente invention concerne un véhicule automobile électrique équipé d'un groupe motopropulseur disposé dans un compartiment moteur avant, comportant des câbles haute tension d'alimentation de la commande de ce groupe, ainsi qu'un procédé d'assemblage d'un tel véhicule.

003. Un type de véhicule électrique connu, présenté notamment par le document FR-A1-3114052, comporte, dans un compartiment avant fermé vers l'arrière par un tablier formant une tôle séparant l'habitacle de ce compartiment, un groupe motopropulseur équipé d'une machine électrique disposée transversalement, qui est reliée par un réducteur aux roues avant motrices du véhicule.

004. Un faisceau de câbles haute tension vient d'une batterie fixée sous l'habitacle, et monte sur la face arrière du groupe motopropulseur disposée face au tablier pour alimenter des boîtiers électriques fixés sur le groupe motopropulseur.

005. Les véhicules automobiles sont soumis pour leur homologation à des essais normalisés de chocs frontaux, comportant un niveau d'énergie élevé entraînant un écrasement de l'avant du véhicule qui fait reculer le groupe motopropulseur vers l'habitacle. On obtient avec ce recul des risques d'endommagement du faisceau électrique qui peut venir s'écraser sur le tablier.

006. Le groupe motopropulseur présenté par ce document comporte un capot rigide venant sur la face arrière du groupe, qui recouvre les connexions d'extrémité des deux câbles du faisceau haute tension venant sur un onduleur d'alimentation de la machine électrique, afin de les protéger contre un écrasement sur le tablier pour éviter des court-circuits dangereux.

007. Le capot comporte de plus en direction du départ des câbles à partir des connexions, une forme allongée recouvrant ce départ, présentant à l'intérieur un système de fixation des câbles qui permet de les serrer en formant un bridage, après avoir connecté et mis en position définitive ces câbles afin qu'ils prennent leur courbure finale.

008. Toutefois le procédé d'assemblage et de fixation des câbles sur ce type de véhicule présente une succession d'opérations qui posent des problèmes de nombre de manipulations élevé, de difficultés pour réaliser ces manipulations et de temps de montage qui est important.

009. En effet, les câbles haute-tension des véhicules automobiles présentent généralement un diamètre assez important avec une rigidité élevée pour passer un courant électrique présentant une forte intensité nécessaire pour obtenir la puissance électrique de traction du véhicule. La connexion des câbles sur l'onduleur est faite avant la pose du capot qui recouvre ces connexions, on pose ensuite le capot avec un montage préalable du bridage sous ce capot autour des câbles, sans le serrer, afin de permettre les mouvements finaux de positionnement de ce capot.

010. La distance entre le connecteur de chaque câble et son point de bridage sous le capot est courte, on obtient au niveau du bridage des câbles un positionnement et une orientation fortement contraints par les connexions bloquées et les câbles qui sont rigides, ce qui rend délicate l'opération suivante de serrage du bridage en aveugle qui doit s'adapter alors à la position finale que ces câbles ont prise.

011. De plus ces opérations de montage du capot de protection sur le faisceau ne peuvent être faites que lors de l'assemblage final du véhicule, comprenant le groupe motopropulseur avec son onduleur installé dans le compartiment moteur. Cette étape d'assemblage du véhicule nécessite la manipulation de plusieurs pièces comprenant les différents câbles du faisceau et le capot avec ses systèmes de maintien des câbles, ce qui ajoute une complexité à cet assemblage.

012. La présente invention a notamment pour but d'éviter ces problèmes de l'art antérieur.

013. Elle propose à cet effet un véhicule automobile électrique comportant dans un compartiment avant un groupe motopropulseur équipé d'un onduleur, comportant un capot de protection fixé sur la face arrière du groupe motopropulseur, venant sur un faisceau de câbles électriques haute tension comprenant des câbles d'onduleur disposant de connecteurs sur l'onduleur, présentant des courbures particulières, et comportant un dispositif de maintien des câbles sur la face arrière du groupe motopropulseur, ce véhicule étant remarquable en ce que le capot de protection est éloigné des connecteurs des câbles d'onduleur, et comporte sur sa face intérieure le dispositif de maintien maintenant les câbles dans des guidages de ce capot en assurant leurs courbures sans les serrer.

014. Un avantage de ce véhicule est qu'en éloignant le capot de protection des connecteurs d'extrémité des câbles d'onduleur, on obtient après le branchement de ces connecteurs une longueur des câbles entre le dispositif de maintien dans le capot et les connecteurs qui donne aux câbles une certaine souplesse au niveau de ce capot. On peut alors préparer au préalable le capot avec le faisceau maintenu à l'intérieur, en réalisant dans ce capot un guidage suivant les courbures à réaliser, pour former un sous-ensemble prêt au montage sur le véhicule.

015. Lors de l'assemblage final du véhicule, le sous-ensemble constitue un unique élément qui est manipulé pour être mis en position, permettant ensuite de brancher les connexions d'extrémité, et de positionner puis serrer le capot sur le groupe motopropulseur avec une facilité de manipulation de ce capot grâce à la souplesse des câbles donnée par leur longueur avant les connecteurs.

016. On obtient alors par une unique opération de serrage du capot de protection sur le groupe motopropulseur, avec les câbles déjà fixés à l'intérieur, un guidage et un maintien de ces câbles, et une couverture des câbles face au tablier disposé en arrière, les protégeant en cas de compression sur ce tablier lors d'un choc avant sur le véhicule.

017. Le véhicule électrique selon l'invention peut comporter de plus une ou plusieurs des caractéristiques suivantes, qui peuvent être combinées entre elles.

018. Avantageusement, le dispositif de maintien comporte une agrafe fixée sur la face intérieure du capot, comprenant des bossages entourant les câbles.

019. En particulier, le capot peut comporter deux agrafes formant deux dispositifs de maintien.

020. Avantageusement, le capot comporte des guidages des câbles d'onduleur formant une courbure suivant environ 90°.

021. De plus, le capot peut être fixé par rapport au sens de marche du véhicule sur un côté gauche du groupe motopropulseur, l'onduleur étant fixé sur le côté droit de ce groupe motopropulseur.

022. Avantageusement, le capot comporte des perçages recevant des vis de fixation sur le carter du groupe motopropulseur.

023. Avantageusement, le capot comporte sur son contour des rebords tournés vers le carter du groupe motopropulseur, qui se terminent proche de ce carter en assurant une résistance à l'écrasement en cas de pression sur l'extérieur du capot.

024. Avantageusement, le carter du groupe motopropulseur comporte des rainures formées dans sa fonderie, disposées sous le capot, réalisant un guidage et une protection des câbles.

025. Avantageusement, le capot comporte une fixation d'un boîtier de chargeur et convertisseur fixé au-dessus du groupe motopropulseur.

026. L'invention a aussi pour objet un procédé d'assemblage d'un véhicule automobile comprenant l'une quelconque des caractéristiques précédentes, équipé de son groupe motopropulseur, remarquable en ce qu'il comporte successivement une étape de préparation d'un sous-ensemble comprenant le capot et les câbles du faisceau maintenus à l'intérieur, une étape de positionnement de ce faisceau sur l'arrière du groupe motopropulseur, une étape de connexion des câbles d'onduleur sur l'onduleur, puis une étape de fixation du capot sur le groupe motopropulseur.

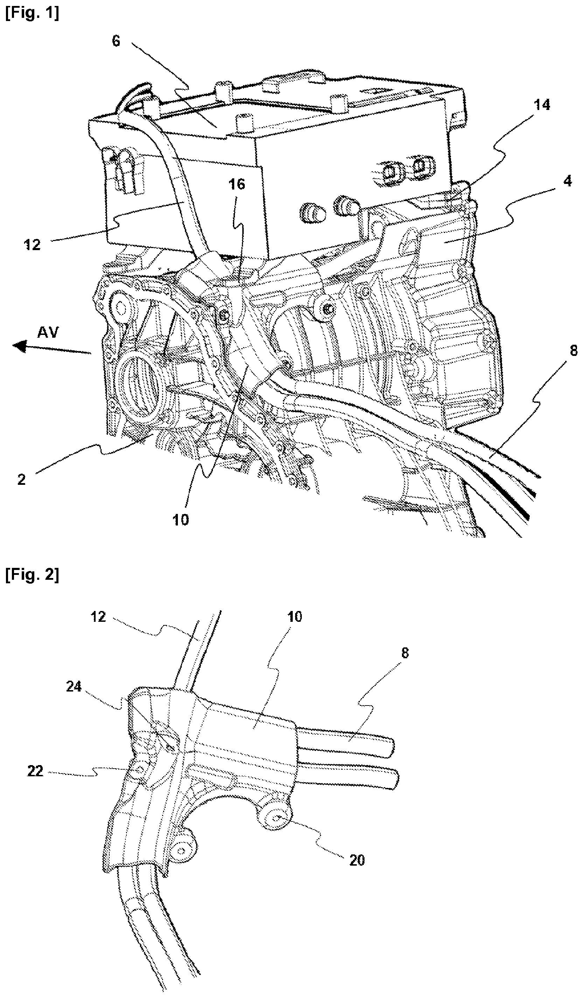

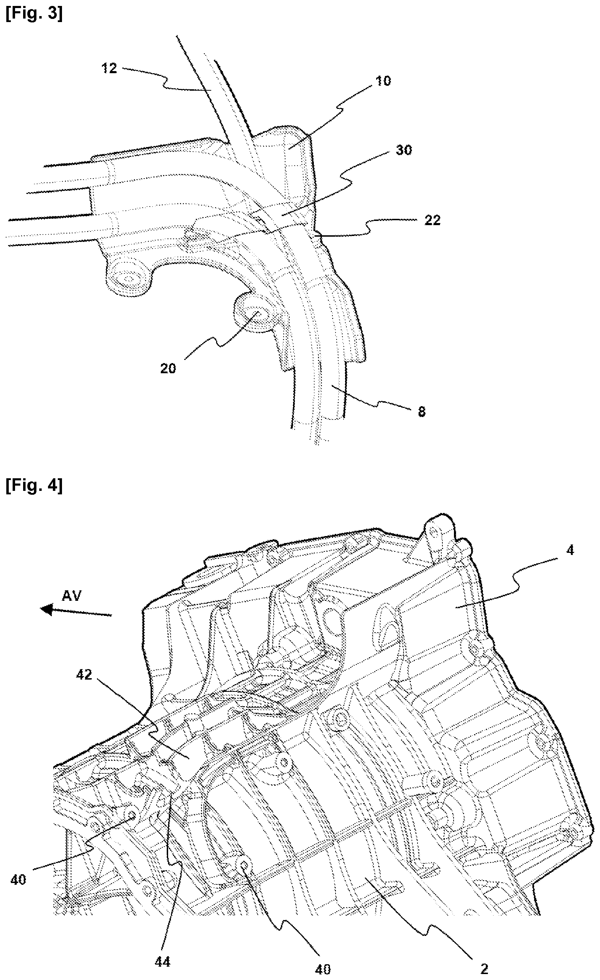

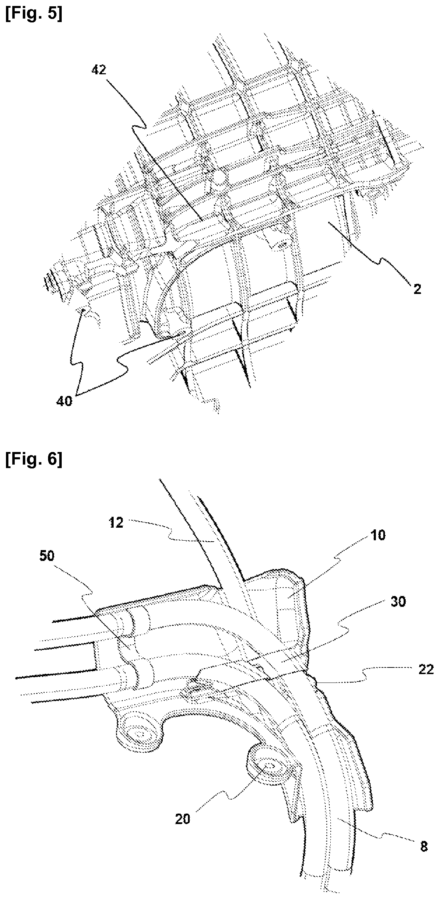

027. L'invention sera mieux comprise et d'autres caractéristiques et avantages apparaîtront plus clairement à la lecture de la description ci-après donnée à titre d'exemple, en référence aux dessins annexés dans lesquels :
028. [Fig. 1] est une vue de la face arrière d'un groupe motopropulseur d'un véhicule selon l'invention ;
029. [Fig. 2] est une vue de détail de la face extérieure du capot de protection de ce véhicule ayant reçu le faisceau de câbles électriques haute tension ;
030. [Fig. 3] est une vue de la face intérieure de ce capot de protection ; 031. [Fig. 4] est une vue du carter seul de la machine électrique de ce véhicule ;
032. [Fig. 5] une vue de détail du guidage des câbles sur le carter de la machine électrique sous le capot de protection ; et
033. [Fig. 6] est une vue de la face intérieure d'un capot de protection suivant une variante.

034. Dans l'ensemble du document la direction avant indiquée par la flèche AV et les côtés droit et gauche sont relatifs au sens de marche du véhicule, la direction supérieure ou vers le haut est relative à la verticale du véhicule qui est posé sur un sol horizontal.

035. Les figures 1 et 2 présentent un groupe motopropulseur comportant une machine électrique 2 disposée transversalement dans le compartiment moteur avant d'un véhicule électrique, et sur le dessus de cette machine, à son extrémité tournée vers le côté droit, un onduleur de puissance disposé dans un logement du carter de cette machine, qui l'alimente en courant électrique.

036. Un faisceau électrique venant d'une batterie disposée à plat sous l'habitacle, comporte deux câbles d'alimentation de l'onduleur 8 qui monte sur le côté gauche de la face arrière du groupe motopropulseur, face au tablier de l'habitacle, pour former au niveau supérieur de la machine 2 une courbe à 90° qui laisse à ces câbles une partie sensiblement droite et assez longue tournée vers l'onduleur. Les câbles de l'onduleur 8 se terminent par des connecteurs fixés sur le côté gauche de l'onduleur 4, juste au-dessus de la machine électrique 2.

037. Le faisceau électrique comporte un troisième câble 12 d'alimentation d'un boîtier 6 fixé au-dessus de la machine électrique 2, comportant un chargeur de batterie et un convertisseur de courant, qui suit les câbles de l'onduleur 8 pour à partir de leurs courbes continuer vers le haut afin d'être connecté sur le dessus de ce boîtier.

038. Un capot de protection 10 réalisé par le moulage d'une matière plastique, d'un alliage d'aluminium, d'une fonte ou d'un acier, couvrant les trois câbles du faisceau, comporte par le bas une arrivée de ces câbles qui sont reliés ensemble, un départ vers la droite des deux câbles d'onduleur 8, et un départ du câble d'alimentation du boîtier 12 vers le haut, dans le prolongement de l'arrivée des trois câbles.

039. Le capot de protection 10 comporte deux perçages de fixation 20 disposés à l'intérieur de la courbure des câbles de l'onduleur 8, et un troisième perçage 22 disposé sur son côté gauche, recevant chacun une vis qui le serre sur le carter de la machine électrique 2. Le capot de protection 10 comporte des rebords tournés vers le carter de la machine électrique 2, qui en position de montage sont très proches de ce carter.

040. Le boîtier du chargeur et convertisseur 6 présentant une forme parallélépipédique, comporte sur son dessous plat deux supports 14 fixés sur le dessus de la machine électrique 2, disposés à droite, et à gauche vers l'avant, qui sont fixés directement sur le carter de la machine électrique.

041. Un troisième support 16 disposé à gauche et vers l'arrière du boîtier 6, est fixé sur un perçage 24 du capot de protection 10, à côté de la troisième fixation 22 de ce capot. On obtient de cette manière avec trois supports 14, 16 une fixation isostatique du boîtier de chargeur et convertisseur 6.

042. La figure 3 présente l'intérieur du capot de protection 10, comprenant des guidages de la courbure des deux câbles de l'onduleur 8, et un guidage du câble du boîtier 12 restant sensiblement droit. Une agrafe de maintien 30 fixée sur la face intérieure du capot de protection 10, forme une bande comprenant des bossages venant au-dessus des deux câbles de l'onduleur 8 au milieu de leur courbure, pour maintenir en position ces câbles avec leurs courbures ainsi que le câble du boîtier 12 qui passe en dessous, sans les serrer.

043. L'agrafe de maintien 30 peut être fixée sur la face intérieure du capot de protection 10 par tout moyen, comprenant une vis, une soudure, un rivet ou un collage.

044. On obtient après le positionnement des trois câbles 8, 12 dans les guidages du capot 10 et la mise en place de l'agrafe de maintien 30, un positionnement de ces câbles avec leur courbure, sans les serrer ce qui leur permettra par la suite des petits déplacements pour réaliser leur ajustement final sur le groupe motopropulseur.

045. Les figures 4 et 5 présentent le carter de la machine électrique 2 comportant en partie supérieure, sur le côté gauche de sa face arrière, trois perçages 40 recevant les trois vis des perçages des fixations 20, 22 du capot de protection 10.

046. Le carter de la machine électrique 2 comporte des rainures courbes 42 de guidage des câbles d'onduleur 8 formés directement dans le moulage en alliage d'aluminium de ce carter, recevant la courbure de ces câbles pour les orienter. Le carter de la machine électrique 2 comporte de plus une rainure droite 44, recevant le câble du boîtier 12.

047. Le procédé d'assemblage du véhicule est le suivant. Un sous-ensemble est préparé chez un fournisseur ou directement dans l'usine d'assemblage du véhicule, comportant le capot de protection 10 avec les trois câbles du faisceau 8, 12 maintenus à l'intérieur par l'agrafe 30, qui présentent leurs courbures mises en position grâce aux guidages intérieurs.

048. Sur la ligne d'assemblage du véhicule, un opérateur saisit le sous-ensemble formant une unique pièce simple à gérer et à manipuler, l'approche de sa position finale puis branche les connecteurs d'extrémité des deux câbles de l'onduleur 8 sur cet onduleur 4. Les trois câbles 8, 12 sont engagés dans leurs rainures correspondantes 42, 44 formées sur le carter de la machine électrique 2, ce qui leur assure un maintien proche de leur position finale.

049. L'opérateur peut ensuite finir de positionner le capot de protection 10 sur les perçages correspondants 40 du carter de la machine électrique 2, en le déplaçant facilement grâce à la longueur restante des câbles de l'onduleur 8 vers cet onduleur 4 qui est suffisante pour donner un peu de souplesse à ces câbles. Les vis de fixation du capot de protection 10 sont ensuite mises en place puis serrées. Pendant ces dernières opérations les petits déplacements du capot de protection 10 sont possibles grâce à l'agrafe de maintien 30 qui garde la position des câbles 8, 12 sans les serrer ce qui permet des légers mouvements de ces câbles prenant leur position finale par rapport au capot.

050. L'opérateur peut ensuite fixer le boîtier du chargeur et convertisseur 6 sur le dessus du groupe motopropulseur, grâce à ses trois supports 14 présentant des vis accessibles sur le côté de ce boîtier. On notera que le capot de protection 10 permet de plus d'obtenir un point de fixation du boîtier 6 sur le dessus du groupe motopropulseur, sur son côté gauche vers l'arrière, ce qui donne trois fixations réparties en triangle assurant une stabilité de ce boîtier.

051. En cas de choc important sur l'avant du véhicule réalisant un recul du groupe motopropulseur sur le tablier disposé juste en arrière, le capot de protection 10 réalisé par un moulage d'une matière plastique rigide, d'un alliage d'aluminium, d'une fonte ou d'un acier, forme une protection comprenant ses rebords tournés vers le carter de la machine électrique 2, venant directement en appui sur ce carter afin d'éviter d'écraser les câbles 8, 12 disposés à l'intérieur. On obtient une protection simple et efficace des câbles haute tension 8, 12.

052. La figure 6 présente une variante du capot de protection 10 comprenant une deuxième agrafe de maintien 50 formant une bande fixée sur le capot par son milieu, comportant de chaque côté un bossage recevant un câble de convertisseur 8 à sa sortie tournée vers le convertisseur 4. De la même manière la deuxième agrafe de maintien 50 assure un guidage des câbles de convertisseur 8 suivant leur orientation, sans les serrer ce qui leur permettra de trouver ensuite leur position finale après la fixation du capot 10 sur le carter.

## Revendications

1. Véhicule automobile électrique comportant dans un compartiment avant un groupe motopropulseur équipé d'un onduleur (4), comportant un capot de protection (10) fixé sur la face arrière du groupe motopropulseur, venant sur un faisceau de câbles électriques haute tension (8, 12) comprenant des câbles d'onduleur (8) disposant de connecteurs sur l'onduleur (4), présentant des courbures particulières, et comportant un dispositif de maintien (30) des câbles (8, 12) sur la face arrière du groupe motopropulseur, **caractérisé en ce que** le capot de protection (10) est éloigné des connecteurs des câbles d'onduleur (8), et comporte sur sa face intérieure le dispositif de maintien (30) maintenant les câbles (8, 12) dans des guidages de ce capot (10) en assurant leurs courbures sans les serrer.

2. Véhicule automobile selon la revendication 1, **caractérisé en ce que** le dispositif de maintien (30) comporte une agrafe fixée sur la face intérieure du capot (10), comprenant des bossages entourant les câbles (8, 12).

3. Véhicule automobile selon la revendication 2, **caractérisé en ce que** le capot (10) comporte deux agrafes formant deux dispositifs de maintien (30).

4. Véhicule automobile selon l'une quelconque des revendications précédentes, **caractérisé en ce que** le capot (10) comporte des guidages des câbles d'onduleur (8) formant une courbure suivant environ 90°.

5. Véhicule automobile selon la revendication 4, **caractérisé en ce que** le capot (10) est fixé par rapport au sens de marche du véhicule sur un côté gauche du groupe motopropulseur, l'onduleur (4) étant fixé sur le côté droit de ce groupe motopropulseur.

6. Véhicule automobile selon l'une quelconque des revendications précédentes, **caractérisé en ce que** le capot (10) comporte des perçages (20) recevant des vis de fixation sur le carter du groupe motopropulseur.

7. Véhicule automobile selon l'une quelconque des revendications précédentes, **caractérisé en ce que** le capot (10) comporte sur son contour des rebords tournés vers le carter du groupe motopropulseur, qui se terminent proche de ce carter en assurant une résistance à l'écrasement en cas de pression sur l'extérieur du capot (10).

8. Véhicule automobile selon l'une quelconque des revendications précédentes, **caractérisé en ce que** le carter du groupe motopropulseur comporte des rainures (42, 46) formées dans sa fonderie, disposées sous le capot (10), réalisant un guidage et une protection des câbles (8, 12).

9. Véhicule automobile selon l'une quelconque des revendications précédentes, **caractérisé en ce que** le capot (10) comporte une fixation (24) d'un boîtier de chargeur et convertisseur (6) fixé au-dessus du groupe motopropulseur.

10. Procédé d'assemblage d'un véhicule automobile selon l'une quelconque des revendications précédentes, équipé de son groupe motopropulseur, **caractérisé en ce qu'**il comporte successivement une étape de préparation d'un sous-ensemble comprenant le capot (10) et les câbles du faisceau (8, 12) maintenus à l'intérieur, une étape de positionnement de ce faisceau sur l'arrière du groupe motopropulseur, une étape de connexion des câbles d'onduleur (8) sur l'onduleur (4), puis une étape de fixation du capot (10) sur le groupe motopropulseur.

## Patentansprüche

1. Elektrisches Kraftfahrzeug mit einem in einem vorderen Fahrgastraum angeordneten Antriebsstrang mit einem Wechselrichter (4), mit einer an der Rückseite des Antriebsstrangs befestigten Schutzhaube (10), die auf ein Hochspannungskabelbündel (8, 12) mit Wechselrichterkabeln (8) mit Anschlüssen am Wechselrichter (4) mit besonderen Krümmungen auftrifft, und mit einer Haltevorrichtung (30) für die Kabel (8, 12) an der Rückseite des Antriebsstrangs, **dadurch gekennzeichnet, dass** die Schutzhaube (10) von den Anschlüssen entfernt ist Wechselrichterkabel (8) und mit der an ihrer Innenseite angeordneten Haltevorrichtung (30), die die Kabel (8, 12) in Führungen dieser Abdeckung (10) einklemmend biegsam hält.

2. Kraftfahrzeug nach Anspruch 1, **dadurch gekennzeichnet, dass** die Haltevorrichtung (30) eine an der Innenseite der Haube (10) befestigte Klammer mit die Seile (8, 12) umgebenden Erhebungen aufweist.

3. Kraftfahrzeug nach Anspruch 2, **dadurch gekennzeichnet, dass** die Haube (10) zwei Klammern aufweist, die zwei Haltevorrichtungen (30) bilden.

4. Kraftfahrzeug nach einem der vorhergehenden Ansprüche, **dadurch gekennzeichnet, dass** die Haube (10) Führungen für die Wechselrichterkabel (8) aufweist, die eine Krümmung um etwa 90° bilden.

5. Kraftfahrzeug nach Anspruch 4, **dadurch gekennzeichnet, dass** die Motorhaube (10) in Bezug auf die Fahrtrichtung des Fahrzeugs auf einer linken Seite des Antriebsaggregats befestigt ist, wobei der Wechselrichter (4) auf der rechten Seite dieses Antriebsaggregats befestigt ist.

6. Kraftfahrzeug nach einem der vorhergehenden Ansprüche, **dadurch gekennzeichnet, dass** die Haube (10) Bohrungen (20) aufweist, die Befestigungsschrauben am Gehäuse des Antriebsstrangs aufnehmen.

7. Kraftfahrzeug nach einem der vorhergehenden Ansprüche, **dadurch gekennzeichnet, dass** die Motorhaube (10) an ihrer Kontur dem Motorantriebsgehäuse zugewandte Flansche aufweist, die in der Nähe dieses Gehäuses enden und bei Druck auf die Außenseite der Motorhaube (10) einen Druckwiderstand gewährleisten.

8. Kraftfahrzeug nach einem der vorhergehenden Ansprüche, **dadurch gekennzeichnet, dass** das Gehäuse des Antriebsstrangs in seiner Gießerei ausgebildete Nuten (42, 46) aufweist, die unter der Haube (10) angeordnet sind und eine Führung und einen Schutz der Seile (8, 12) bewirken.

9. Kraftfahrzeug nach einem der vorhergehenden Ansprüche, **dadurch gekennzeichnet, dass** die Haube (10) eine Befestigung (24) eines oberhalb des Antriebsstrangs befestigten Lade- und Wandlergehäuses (6) aufweist.

10. Verfahren zur Montage eines Kraftfahrzeugs nach einem der vorhergehenden Ansprüche, das mit seiner Antriebseinheit ausgestattet ist, **dadurch gekennzeichnet, dass** es nacheinander einen Schritt der Vorbereitung einer Untereinheit umfasst, die die Haube (10) und die Kabel des Bündels (8, 12) umfasst, die darin gehalten werden, einen Schritt der Positionierung dieses Bündels auf der Rückseite der Antriebseinheit, einen Schritt der Verbindung der Wechselrichterkabel (8) mit dem Wechselrichter (4), dann einen Schritt der Befestigung der Haube (10) an der Antriebseinheit.

## Claims

1. Electric motor vehicle comprising, in a front compartment, a power train equipped with an inverter (4), comprising a protective cover (10) fixed to the rear face of the power train, coming onto a bundle of high-voltage electric cables (8, 12) comprising inverter cables (8) having connectors on the inverter (4), having particular curvatures, and comprising a device (30) for holding the cables (8, 12) on the rear face of the power train, wherein the protective cover (10) is spaced from the connectors of the inverter cables (8), and comprises on its inner face the holding device (30) holding the cables (8, 12) in guides of this cover (10) while ensuring their curvatures without clamping them.

2. Motor vehicle according to claim 1, **characterised in that** the holding device (30) comprises a clip fixed to the inner face of the hood (10), comprising bosses surrounding the cables (8, 12).

3. Motor vehicle according to claim 2, **characterised in that** the hood (10) comprises two clips forming two holding devices (30).

4. Motor vehicle according to any one of the previous claims, **characterised in that** the hood (10) comprises guides for the inverter cables (8) which form a curvature along approximately 90°.

5. Motor vehicle according to claim 4, wherein the hood (10) is fixed by report to the running direction of the vehicle on a left-hand side of the power train, the inverter (4) being fixed to the right-hand side of this power train.

6. Motor vehicle according to any one of the previous claims, **characterised in that** the hood (10) comprises bores (20) receiving screws for fixing to the casing of the power train.

7. Motor vehicle according to any one of the previous claims, **characterised in that** the bonnet (10) has, on its outline, rims facing the casing of the power train, which end close to this casing, ensuring resistance to crushing in the event of pressure on the outside of the bonnet (10).

8. Motor vehicle according to any one of the previous claims, **characterised in that** the casing of the power train comprises grooves (42, 46) formed in its foundry, arranged under the hood (10), providing guidance and protection of the cables (8, 12).

9. Motor vehicle according to any one of the previous claims, **characterised in that** the hood (10) comprises a fastening (24) of a shipper housing and converter (6) fastened above the power train.

10. Method for assembling a motor vehicle according to any one of the previous claims, equipped with its power train, comprising successively a step of preparing a subassembly comprising the hood (10) and the cables of the bundle (8, 12) held inside, a step of positioning this bundle on the rear of the power train, a step of connecting the inverter cables (8) to the inverter (4), then a step of fixing the hood (10) to the power train.
